# EUROPEAN PATENT APPLICATION

(11) **EP 4 618 499 A1**
(43) Date of publication of application: **17.09.2025**
(21) Application number: 23896098.3
(22) Date of filing: 02.08.2023
(51) Int. Cl.: H04L 41/5009

(54) **DATA TRANSMISSION METHOD AND APPARATUS, AND COMMUNICATION DEVICE**

(30) Priority: 02.12.2022 CN 202211537838
(71) Applicant: ZTE CORPORATION, Shenzhen, Guangdong 518057 (CN)
(72) Inventor: HUANG, Guangping, Shenzhen, Guangdong 518057 (CN); ZHOU, Fenlin, Shenzhen, Guangdong 518057 (CN)
(74) Representative: Ziebig Hengelhaupt Intellectual Property Attorneys Patentanwaltskanzlei PartGmbB
(86) International application number: PCT/CN2023/110805
(87) International publication number: WO 2024/113935

(57) **Abstract**

Embodiments of the present application provide a data transmission method and apparatus, and a communication device. The method comprises: a gateway device receives a service data stream sent by a service request node; and when the service data stream carries a service identifier, forwarding the service data stream according to a target routing forwarding strategy corresponding to the service identifier, wherein the service identifier is used for identifying a service type requested by a service requester.

## Description

### CROSS-REFERENCE TO RELATED APPLICATIONS

The present application claims priority to the Chinese patent application No. 202211537838.5 filed on December 2, 2022 to the China Patent Office, and entitled "DATA TRANSMISSION METHOD AND APPARATUS, AND COMMUNICATION DEVICE", the entire content of which is incorporated herein by reference.

### TECHNICAL FIELD

The present application relates to the technical field of communication, in particular to a data transmission method and apparatus, and a communication device.

### BACKGROUND

Computing-networking integration (CNI) has become a fundamental industry consensus and hotspot in the 5G era and the post-5G era. For a network-centric computing-network addressing routing scheme involved in CNI, a routing policy for service flow needs to be performed in both the computing and network dimensions, i.e., the network needs to select an appropriate computing node (i.e., service instance) from a plurality of service instances based on the computing state and the network state.

In the related art, in order to avoid maintaining of a service flow affinity entry, ordinary flow processing is performed on a packet other than a first packet of a service flow during selection of computing nodes, however, such mechanism can satisfy the service level agreement (SLA) of a service flow in the computing dimension, but cannot satisfy the SLA in the networking dimension, which affects the performance of the communication system.

### SUMMARY

Embodiments of the present application aim to provide a data transmission method and apparatus, and a communication device, which can satisfy the networking SLA while satisfying the SLA of the service flow in the computing dimension, thus ensuring the performance of a communication system.

The embodiments of the present application are implemented through various aspects therebelow.

In a first aspect, embodiments of the present application provide a data transmission method, performed by a gateway device. The method includes: receiving a service data stream sent by a service request node; and forwarding, in a case that the service data stream carries a service identifier, the service data stream according to a target routing forwarding policy corresponding to the service identifier, where the service identifier is used for identifying a service type requested by a service requester.

In a second aspect, embodiments of the present application provide a data transmission method, performed by a network node. The method includes: sending a plurality of routing forwarding policies to a gateway device, where a plurality of the routing forwarding policies are indexed by a service identifier, or, a plurality of the routing forwarding policies have a one-to-one mapping relationship with service identifiers respectively; and the service identifier is used for identifying a service type.

In a third aspect, embodiments of the present application provide a data transmission method, performed by a service request node. The method includes: sending a service data stream, where the service data stream carries a service identifier and/or a destination address, and the service identifier is used for identifying a service type requested by a service requester.

In a fourth aspect, embodiments of the present application provide a data transmission apparatus. The apparatus includes: a receiving module, configured to receive a service data stream sent by a service request node; and a forwarding module, configured to forward, in a case that the service data stream carries a service identifier, the service data stream according to a target routing forwarding policy corresponding to the service identifier, where the service identifier is used for identifying a service type requested by a service requester.

In a fifth aspect, embodiments of the present application provide a data transmission apparatus. The apparatus includes: a first sending module, configured to send a plurality of routing forwarding policies to a gateway device, where a plurality of routing forwarding policies are indexed by a service identifier, or, a plurality of the routing forwarding policies have a one-to-one mapping relationship with service identifiers respectively; and the service identifier is used for identifying a service type.

In a sixth aspect, embodiments of the present application provide a data transmission apparatus. The apparatus includes: a second sending module, configured to send a service data stream, wherein the service data stream carries a service identifier and/or a destination address, and the service identifier is used for identifying a service type requested by a service requester.

In a seventh aspect, embodiments of the present application provide a communication device, including: a memory, a processor, and computer-executable instructions stored on the memory and capable of running on the processor. The computer-executable instructions, when executed by the processor, implement the steps of the method according to the first aspect, the second aspect or the third aspect.

In an eighth aspect, embodiments of the present application provide a computer-readable storage medium. The computer-readable storage medium is configured to store computer-executable instructions. The computer-executable instructions, when executed by a processor, implement the steps of the method according to the first aspect, the second aspect or the third aspect.

### BRIEF DESCRIPTION OF DRAWING(S)

To illustrate the technical solutions in embodiments of the present application or in the prior art more clearly, the accompanying drawings required for describing the embodiments or the prior art will be briefly introduced below. Apparently, the accompanying drawings in the following description are only some embodiments recorded in the present application, and a person of ordinary skill in the art may still derive other accompanying drawings from these accompanying drawings without creative efforts.
FIG. 1 shows a first schematic flowchart of a data transmission method provided by embodiments of the present application.
FIG. 2 shows a second schematic flowchart of a data transmission method provided by embodiments of the present application.
FIG. 3a shows a first schematic flowchart of a flow affinity stateless service of a service-level computing-network routing forwarding policy provided by embodiments of the present application.
FIG. 3b shows a second schematic flowchart of a flow affinity stateless service of a service-level computing-network routing forwarding policy provided by embodiments of the present application.
FIG. 4 shows a third schematic flowchart of a data transmission method provided by embodiments of the present application.
FIG. 5 shows a fourth schematic flowchart of a data transmission method provided by embodiments of the present application.
FIG. 6 shows a first schematic structural diagram of a data transmission apparatus provided by embodiments of the present application.
FIG. 7 shows a second schematic structural diagram of a data transmission apparatus provided by embodiments of the present application.
FIG. 8 shows a third schematic structural diagram of a data transmission apparatus provided by embodiments of the present application.
FIG. 9 is a schematic hardware structure diagram of a communication device for performing the data transmission method provided by embodiments of the present application.

### DETAILED DESCRIPTION

In order to make those skilled in the art understand the technical solutions in the present application better, the technical solutions in the embodiments of the present application will be described below clearly and completely with reference to the accompanying drawings in the embodiments of the present application. Apparently, the described embodiments are only part of the embodiments of the present application, but not all the embodiments. All other embodiments obtained by those ordinarily skilled in the art based on the embodiments in the present application without making creative efforts should fall within the scope of protection of the present application.

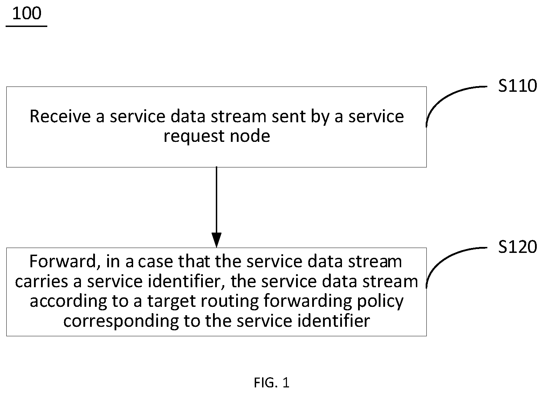

FIG. 1 shows a schematic flowchart of a data transmission method 100 provided by embodiments of the present application. The method 100 may be executed by a gateway device, for example, the method may be executed by software or hardware installed in the gateway device. As shown in FIG. 1, the method 100 may include, but is not limited to the following steps.

At S110: a service data stream sent by a service request node is received.

The service data stream may be sent by a service requester to request a corresponding service. In the present embodiment, the service data stream may be a service data stream as a first packet or a service data stream as a subsequent packet, where the "first packet" may be understood as the service data stream by which the service requester requests the corresponding service for the first time, and the "subsequent packet" may be understood as the service data stream by which the service requester requesting the corresponding service other than the first time.

At S120: in a case that the service data stream carries a service identifier, the service data stream is forwarded according to a target routing forwarding policy corresponding to the service identifier.

The service identifier (also called Service Identification, SID) is used for identifying a service type requested by the service requester. For example, taking a packet data network as an example, the service identifier may be used to represent a common service type known to a computing-networking system, and may be uniformly controlled and maintained by a computing-networking operation system and the like.

Compared to a computing-networking integration routing scheme in which a service requester needs to express a service purpose/intention based on a globally unique routable destination address (DA, such as an IP address), in the present application, the service purpose/intention can be expressed by associating the service identifier with a plurality of service instances and/or network paths and the service identifier is independent of a location of the service requester and/or a gateway device. Thus, the gateway device can execute a computing-networking routing forwarding policy according to the service identifier, thereby effectively ensuring that a subsequent service data stream (i.e., the subsequent packet) obtains a network service level agreement (SLA) service equivalent to the service data stream as the first packet. That is, a refined computing-networking consistency service can be provided for a service traffic, and the running performance of the network can be ensured.

It should be noted that in the present embodiment, the service identifier is used as an index of a computing-networking requirement (i.e., computing-networking SLA) of the corresponding service type, that is, the target routing forwarding policy may collaborate with information such as the service identifier, the computing-networking requirement indexed by the service identifier, a computing-networking resource indexed by the service identifier, which is not limited here. In addition, the aforementioned target routing forwarding policy may be configured in the gateway device by protocol agreements or network configurations, which is not limited here.

It should be further noted that, the gateway device that can forward the service data stream according to the target routing forwarding policy corresponding to the service identifier as mentioned, in addition, in the implementation process of the present application, for a case that the service data stream does not carry a service identifier, the gateway device may also forward the service data stream according to a routing forwarding policy (or referred to as a non-service-level computing-networking routing policy) other than the target routing forwarding policy. That is to say, for the service data stream that does not carry the service identifier, the gateway device may reuse the routing forwarding policy in some cases to ensure the reliability and continuity of the data transmission process.

In the present embodiment, by identifying the service identifier carried in the service data stream sent by the service requester, and forwarding the service data stream according to the target routing forwarding policy corresponding to the service identifier, the refined computing-networking consistency service can be provided for the service traffic, so that the service data streams (such as the first packet and the subsequent packet) can obtain the equivalent network SLA service, thereby ensuring the performance of a communication system.

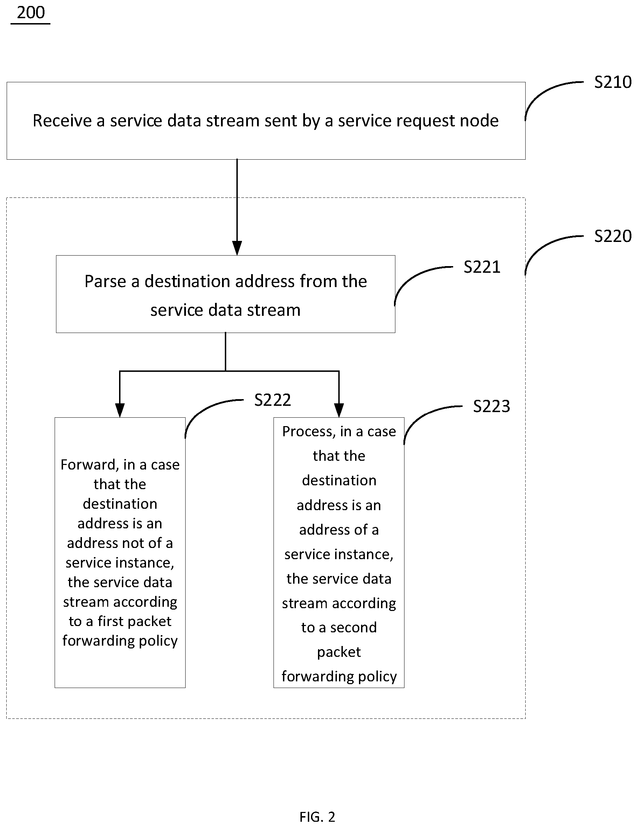

FIG. 2 shows a schematic flowchart of a data transmission method 200 provided by embodiments of the present application. The method 200 may be executed by a gateway device, for example, the method may be executed by software or hardware installed in the gateway device. As shown in FIG. 2, the method 200 may include, but is not limited to the following steps.

At S210: a service data stream sent by a service request node is received.

It may be understood that the implementation process of S210 may refer to the relevant descriptions in the method embodiment 100, and will not be repeated here to avoid repetition.

At S220: in a case that the service data stream carries a service identifier, the service data stream is forwarded according to a target routing forwarding policy corresponding to the service identifier.

The service identifier is used for identifying a service type requested by a service requester.

It may be understood that for an implementation process of S220, reference may be made to the descriptions in the method embodiment 100. In one possible implementation, in order to improve the routing efficiency and provide the refined computing-networking consistency service for the service traffic, the gateway device can forward the service data stream depending on the service data stream is the first packet or the subsequent packet. For example, referring to FIG. 2 again, forwarding, by the gateway device, the service data stream according to the target routing forwarding policy corresponding to the service identifier may include the following S221-S223, with the details as follows.

At S221, a destination address is parsed from the service data stream.

The destination address is used to as an index for a service provider (or referred to as a service instance, a service node, a service instance node, a service instance where the service node is located, etc.) that provides the service corresponding to the service data stream.

At S222, in a case that the destination address is an address not of a service instance, the service data stream is forwarded according to a first packet forwarding policy.

The first packet forwarding policy belongs to the target routing forwarding policy, and the first packet forwarding policy is used to forward the service data stream as the first packet. That is to say, when the service data stream carries the service identifier and an address not of a service instance, the gateway device determines that the service data stream is a service data stream used as a first packet. Then, the gateway device may determine the first packet forwarding policy used to forward the first packet by using the service identifier as the index.

Taking a packet data network as an example, when a CNI routing policy (such as the first packet data network) is implemented by taking the packet data network as the center, the packet data network needs to enhance perception of the computing resource state on the basis of the existing network resource state (network topology, a link dynamic state, etc.), a computing-networking resource state database indexed by the routable and discoverable service identifier is constructed, and on such basis, the dynamically optimal computing-networking routing policy is calculated or configured for the computing-networking SLA requirement according to the service type indexed by the service identifier.

For example, in a distributed multi-service-instance and multi-network-path scenario corresponding to the same service, a control system (i.e., a network node) in the packet data network integrates the computing and networking resource states according to the computing-networking SLA requirement of the service, and generates a dynamic CNI routing policy (such as the first packet forwarding policy) which is used as the basis for forwarding service traffic by edge nodes (an ingress gateway and an egress gateway) of the packet data network.

In this case, as a possible implementation, considering that the gateway device needs to perform computing-networking selection for the first packet, in the present embodiment, the first packet forwarding policy may be configured with at least one of the following (11)-(16):
(11) a service identifier;
(12) a network SLA requirement indexed by a service identifier;
(13) a computing resource state indexed by a service identifier of a service instance, such as computing, storage, and network;
(14) a network resource state indexed by a service identifier, such as the resource state of a network path from a network ingress gateway to each service node;
(15) related information of a first gateway, where the first gateway being a network ingress gateway; or
(16) related information of a second gateway, where the second gateway being a network egress gateway, and the related information of the second gateway being indexed by a service identifier.

At S223, in a case that the destination address is an address of a service instance, the service data stream is processed according to a second packet forwarding policy.

The second packet forwarding policy belongs to the target routing forwarding policy, and the second packet forwarding policy is used to forward the service data stream as the subsequent packet. It may be understood that for the case where the destination address is an address of a service instance, the gateway device may determine that the service data stream is the subsequent packet, and the gateway device has established a service instance corresponding to the address of the service instance. Therefore, the gateway device may forward the service data stream as the subsequent packet to the established service instance based on the second packet forwarding policy, so that the subsequent packet of the service data stream can obtain a network SLA service consistent with that of the first packet of the service data stream.

That is to say, after the service data stream as the first packet arrives at the gateway device, the gateway device guides a service packet (i.e., the service data stream) to the corresponding network path and service instance node according to the computing-networking routing forwarding policy (i.e., the first packet forwarding policy), that is, the gateway device establishes the service instance node based on the service identifier and the first packet forwarding policy. On this basis, the gateway device (such as the packet data network system or a service system) may return the established address of the service instance to the service requester by a signaling, so that when sending the service data stream subsequently, the service requester may send the service data stream as the subsequent packet based on the address of the service instance, for example, based on the address of the service instance carried in the service data stream. Therefore, on one hand, it can be ensured that all packets (such as the first packet and the subsequent packet) of the same service traffic can reach the same specific service node (such as the service node corresponding to the address of the service instance), and the affinity of the service flow is ensued. On the other hand, by returning a globally unique routable address, such as the address of the service instance, to the service requester, the gateway device can perform traffic forwarding based on the address of the service instance without maintaining a service flow affinity entry of the service data stream, and the network extendibility is improved.

Based on this, in an implementation, in the case where the destination address is an address not of a service instance, the gateway device may determine an address of a service instance corresponding to the destination address; and send the address of the service instance corresponding to the destination address to the service request node.

In addition, considering that the gateway device has already established the service instance to provide the service when the subsequent packet is forwarded, that is, the gateway device only needs to select a network for the subsequent packet. Therefore, the second packet forwarding policy used to forward the subsequent packet may be different from the first packet forwarding policy used to forward the first packet. For example, the second packet forwarding policy may be configured with at least one of the following (21)-(25):
(21) a service identifier;
(22)a network SLA requirement indexed by a service identifier;
(23) a network resource state indexed by a service identifier, such as the resource state of a network path from a network ingress node to each service node;
(24) related information of a third gateway, where the third gateway is a network ingress gateway; or
(25) an address prefix, indexed by a service identifier, of an address of a service instance.

It should be noted that in the process of forwarding the service data stream as the subsequent packet, the gateway device may only execute the routing forwarding policy (such as the second packet forwarding policy) indexed by the service identifier. However, taking the packet data network as an example, during actual deployment, service nodes are distributed only in a specific cluster or node, and service systems deployed in these nodes notify respective public network IP address prefixes thereof to the packet data network. Then, in order to ensure that the subsequent packet of the service traffic obtains the consistent network SLA service, the packet data network control system (i.e. the network node) may issue the target routing forwarding policy, such as the second packet forwarding policy and the first packet forwarding policy, to the network gateway node (i.e. the gateway device).

That is to say, the network node may send a plurality of routing forwarding policies to the gateway device, and correspondingly, the gateway device may receive a plurality of routing forwarding policies sent by the network node, where the f routing forwarding policies are indexed by a service identifier, or, the routing forwarding policies have a one-to-one mapping relationship with service identifiers respectively.

For the aforementioned routing forwarding policies, when receiving the service data stream, the gateway device may select the target routing policy (such as the second packet forwarding policy and the first packet forwarding policy) according to the following manner 1 or manner 2, with the details as follows.

Manner 1: the target routing policy is selected from a plurality of routing forwarding policies according to the service identifier carried in the service data stream. In other words, for manner 1, the routing forwarding policies are selected by taking the service identifier as the index.

Manner 2: the target routing policy is selected from a plurality of routing forwarding policies according to a service characteristic parameter corresponding to the service identifier carried in the service data stream, wherein a service characteristic parameter corresponding to the target routing policy is the same as the service characteristic parameter corresponding to the service identifier. In other words, in manner 2, the routing forwarding policies have the one-to-one mapping relationship with the service identifiers respectively, or when issuing the routing forwarding policies to the gateway device, the network node may issue a plurality of routing forwarding policies together with a mapping table between the routing forwarding policies and the service identifiers.

Optionally, the aforementioned service characteristic parameter may include at least one of the network bandwidth, latency, jitter, packet loss, or computing quality of service.

It should be noted that taking a CNI routing scenario centered on the packet data network as an example, the network operation system may perceive and maintain information such as the computing resource state and the network resource state, and on such basis, execute the network routing policy, such as the second packet forwarding policy and the first packet forwarding policy, on the service data traffic.

In the present embodiment, by issuing the routing forwarding policy to the gateway device, in scenarios where the gateway device (such as the network ingress gateway) migrates due to movement of the service requester (such as the terminal) or where the gateway device fails and needs to perform hot switching of service traffic ( path switching without interrupting the service), the service data stream sent by the service requester can obtain network SLA services and experiences with the consistent service level granularity based on the routing forwarding policy, , which ensures the running performance of the network, and avoids the problems caused by that network nodes need to synchronize the service flow affinity entry frequently with much effort in the related art.

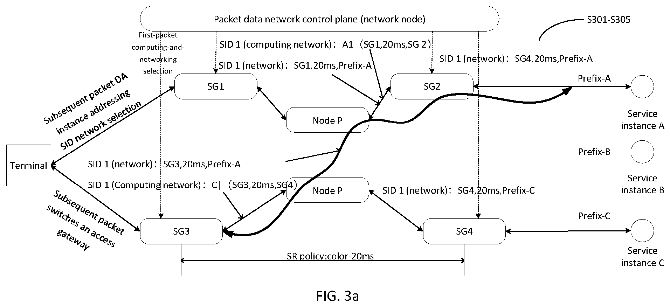

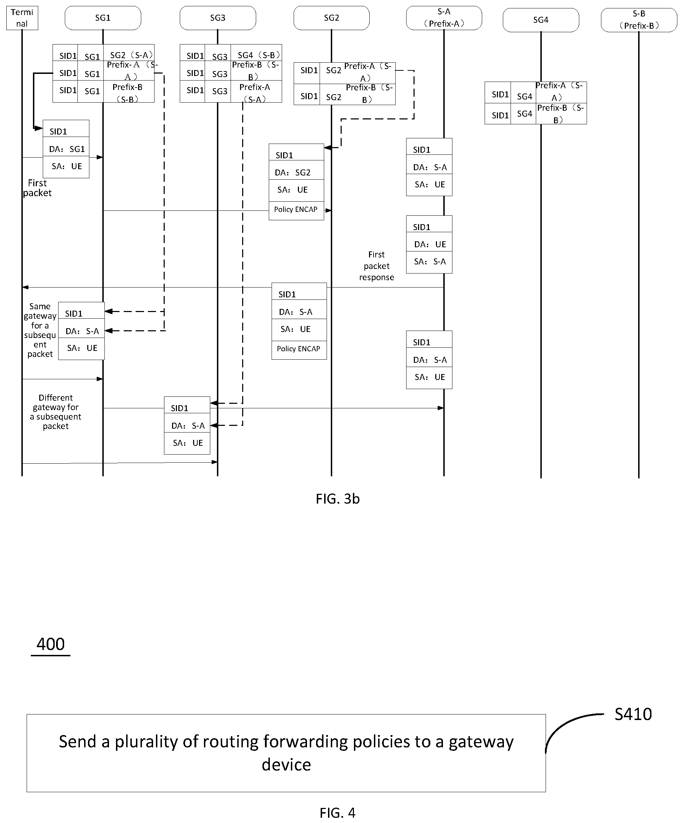

Based on the descriptions of the aforementioned method embodiments 100 and 200, the following takes the CNI routing scenario centered on the packet data network as an example, and combines FIG. 3a, FIG. 3b, and Example 1 to provide an exemplary description of the implementation process of the data transmission method provided in the present application, with the details as follows. In FIG. 3a and FIG. 3b, a terminal is a service requester, SG1, SG2, SG3, and SG4 are gateway devices, a node P is a common intermediate node in the network, an SR Policy is a source routing policy, A, B and C are service instances or service nodes, DA is an destination address, SA is a source address, S-A (Prefix-A)/S-B (Prefix-B) are two service instance nodes and corresponding address prefixes thereof, SID1 (computing network) is used for computing selection of the gateway device, and SID1 (network) is used for network selection of the gateway device.

### Example 1

At S301, a service data stream sent by a terminal arrives at a network ingress node SG1 (i.e., gateway device), the network ingress gateway SG1 decapsulates the service data stream, and judges whether the service data stream carries a service identifier SID1, and if the service data stream does not carry the service identifier SID1, the service data stream is forwarded according to a non-service-level computing-networking routing forwarding procedure.

At S302, when it is determined that the service data stream carries a service identifier SID1, a destination address field DA is further parsed from the service data stream, and whether the destination address carried in the service data stream is an address of a service instance, such as Prefix-A is judged.

At S303, if the destination address carried in the service data stream is an address of a service instance of a service node, the service data stream is processed according to a subsequent-packet forwarding procedure of service traffic.

For example, the network ingress node SG1 forwards the service data stream according to a routing policy (i.e., second packet forwarding policy) indexed by the service identifier SID1.

For another example, the network ingress node SG1 guides the service data stream to a network routing policy (i.e., second packet forwarding policy) indexed by the service identifier SID1 according to a mapping relationship between the service identifier SID1 and a routing policy (such as Color of SR Policy, etc.), and forwards the service data stream.

The difference between the aforementioned two routing policy selections is that, the network routing policy in the latter one is not generated or issued for the service identifier, but an existing routing policy in the network domain, that is, the service identifier plays a role of indexing and associating.

At S304, if the destination address carried in the service data stream is not an address of a service node instance, a packet is processed according to a service first-packet processing procedure. For example, the network ingress node forwards the service data stream according to a routing policy (i.e., first packet forwarding policy) indexed by the service identifier.

And the network ingress gateway establishes the address of the service instance where the service node is located, such as Prefix-A, and returns the address of the service instance to the terminal by means of a signaling.

At S305, when the terminal sends the service data stream subsequently, a destination address field in a data stream packet used as a subsequent packet is updated to the address of the service instance in the S304.

Moreover, referring to FIG. 3a and FIG. 3b again, for aforementioned S303, if the service data stream used as the first packet is forwarded by the network ingress node SG1, but the problems such as movement or SG1 failures occur when the terminal sends the subsequent packet, the service data stream as the subsequent packet may be forwarded by a network ingress node SG3 different from SG1 (i.e., hot switching of gateway devices). Since the service data stream carries the service identifier SID1 and the address of the service instance, and SG1 and SG3 are configured with the network routing policy, the service data stream forwarded by SG3 may also be guided or forwarded to a service instance corresponding to the address of the service instance (e.g., service provider A), so that the service data streams sent by the terminal can obtain consistent network SLA services and experience.

It may be understood that the implementation process of each step in the foregoing Example 1 may refer to the related description in the foregoing method embodiments 100-200, and achieve the same or corresponding technical effects, which will not be repeated here to avoid repetition.

In the present embodiment, when a CNI routing policy (e.g., centered on a packet data network) is enforced, it is required to enhance perception of a computing resource state on the basis of an existing network resource state (network topology, a link dynamic state, etc.), and a computing-networking resource state database indexed by a routable and discoverable service identifier is constructed, and on such basis, a dynamically optimal computing-networking routing policy is calculated for the computing-networking SLA requirements according the service type indexed by the service identifier. For example, in a distributed multi-service-instance and multi-network-path scenario corresponding to the same service, the dynamically optimal computing-networking integrated routing policy is generated according to computing-networking SLA requirement of the service together with the computing-networking resource state, and the routing policy is used as a basis for forwarding the service data stream by network edge nodes (network ingress gateway, and network egress gateway), refined computing-networking consistency services can be provided for service traffics, and the service data stream (e.g., first packets and subsequent packets, etc.) can obtain equivalent network SLA services, and the performance of the communication system is ensured.

Further, CNI has become an industry consensus and is also one of the important scenario-driven elements of the post-5G era. The network-centric CNI scheme in the present application has the comprehensive advantages in technology, resource, ecosystem, and other aspects. It can achieve proper balance among incremental innovation, overall performance, and operational costs, fulfills lightweight state maintenance and finer-grained service guarantees, and provides dual functional assurances of flow-affinity stateless processing at network nodes and service-level network SLA perception and response.

FIG. 4 shows a schematic flowchart of a data transmission method 400 provided by embodiments of the present application. The method 400 may be performed by a network node, such as software or hardware installed in the network node. As shown in FIG. 4, the method 400 may include but is not limited to the following steps.

At S410, a plurality of routing forwarding policies are sent to a gateway device.

A plurality of routing forwarding policies are indexed by a service identifier, or, a plurality of the routing forwarding policies have a one-to-one mapping relationship with service identifiers respectively. The service identifier is used for identifying a service type or the service identifiers are used for identifying service types respectively.

Optionally, a plurality of routing forwarding policies include a second packet forwarding policy and a first packet forwarding policy. The second packet forwarding policy is used to forward a service data stream as a subsequent packet. The first packet forwarding policy is used to forward a service data stream as a first packet.

Optionally, the first packet forwarding policy is configured with at least one of the following: a service identifier; a network service level agreement (SLA) requirement indexed by a service identifier; a computing resource state, indexed by a service identifier, of a service instance; a network resource state indexed by a service identifier; related information of a first gateway, the first gateway being a network ingress gateway; or related information of a second gateway, the second gateway being a network egress gateway, and the related information of the second gateway being indexed by a service identifier.

Optionally, the second packet forwarding policy is configured with at least one of the following: a service identifier; a network service level agreement (SLA) requirement indexed by a service identifier; a network resource state indexed by a service identifier; related information of a third gateway, the third gateway being a network ingress gateway; or an address prefix, indexed by a service identifier, of an address of a service instance.

It can be understood that the data transmission method provided in the method embodiment 400 has the same or corresponding technical features as the foregoing method embodiments 100 and/or 200, therefore, each implementation process of the data transmission method provided in the method embodiment 400 may refer to the related description in the foregoing method embodiments 100 and/or 200, and achieve the same or corresponding technical effects, which will not be repeated here to avoid repetition.

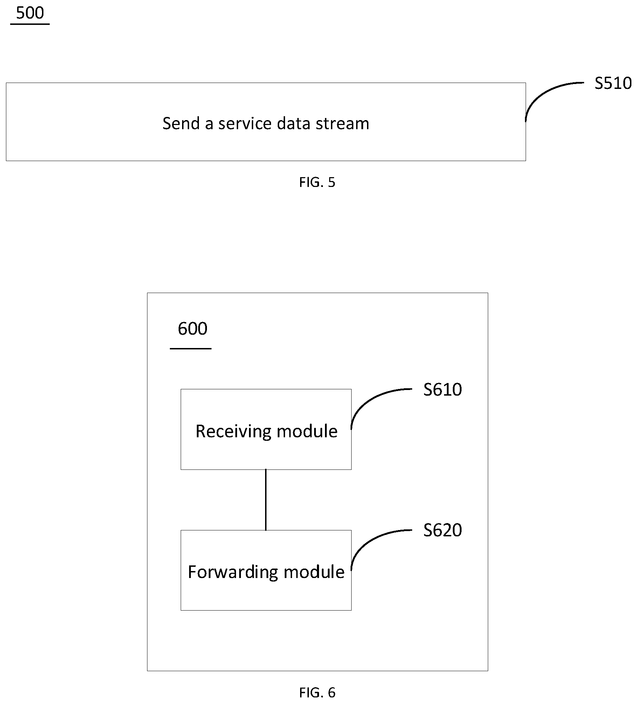

FIG. 5 shows a schematic flowchart of a data transmission method 500 provided by embodiments of the present application. The method 500 may be performed by a service request node, such as software or hardware installed in the service request node. As shown in FIG. 5, the method 500 may include but is not limited to the following.

At S510, a service data stream is sent.

The service data stream carries a service identifier and/or a destination address, and the service identifier is used for identifying a service type requested by a service requester.

Optionally, sending the service data stream includes at least one of the following: in a case that the service data stream is a first packet, the service data stream which carries the destination address but does not carry the service identifier is sent; or, in a case that the service data stream is a subsequent packet, the service data stream which carries the destination address and the service identifier is sent, wherein the service identifier is determined by a gateway device based on the destination address and sent by the gateway device.

It can be understood that the data transmission method provided in the method embodiment 500 has the same or corresponding technical features as the foregoing method embodiments 100 and/or 200, therefore, each implementation process of the data transmission method provided in the method embodiment 500 may refer to the related description in the foregoing method embodiments 100 and/or 200, and achieve the same or corresponding technical effects, which will not be repeated here to avoid repetition.

FIG. 6 shows a schematic structural diagram of a data transmission apparatus 600 provided by embodiments of the present application. The apparatus 600 includes: a receiving module 610, configured to receive a service data stream sent by a service request node; and a forwarding module 620, configured to forward, in a case that the service data stream carries a service identifier, the service data stream according to a target routing forwarding policy corresponding to the service identifier, wherein the service identifier is used for identifying a service type requested by a service requester.

Optionally, the forwarding module 620 forwarding the service data stream according to the target routing forwarding policy corresponding to the service identifier includes: a destination address is parsed from the service data stream; in a case that the destination address is an address of a service instance, the service data stream is processed according to a second packet forwarding policy; and in a case that the destination address is an address not of a service instance, the service data stream is forwarded according to a first packet forwarding policy. The second packet forwarding policy and the first packet forwarding policy belong to the target routing forwarding policy, the second packet forwarding policy is used to forward a service data stream as a subsequent packet, and the first packet forwarding policy is used to forward a service data stream as a first packet.

Optionally, the first packet forwarding policy is configured with at least one of the following: a service identifier; a network service level agreement (SLA) requirement indexed by a service identifier; a computing resource state indexed by a service identifier of a service instance; a network resource state indexed by the service identifier; related information of a first gateway, the first gateway being a network ingress gateway; or related information of a second gateway, the second gateway being a network egress gateway, and the related information of the second gateway being indexed by a service identifier.

Optionally, the second packet forwarding policy is configured with at least one of the following: a service identifier; a network service level agreement (SLA) requirement indexed by a service identifier; a network resource state indexed by a service identifier; related information of a third gateway, the third gateway being a network ingress gateway; or an address prefix, indexed by a service identifier, of an address of a service instance.

Optionally, the forwarding module 620 is further configured to perform any one of the following: selecting a target routing forwarding policy from a plurality of routing forwarding policies according to the service identifier; or selecting a target routing forwarding policy from a plurality of routing forwarding policies according to a service characteristic parameter corresponding to the service identifier, wherein a service characteristic parameter corresponding to the target routing policy is the same as the service characteristic parameter corresponding to the service identifier. The service characteristic parameter includes at least one of the network bandwidth, latency, jitter, packet loss, or computing quality of service.

Optionally, the receiving module 610 is further configured to receive a plurality of routing forwarding policies sent by a network node, wherein a plurality of routing forwarding policies are indexed by a service identifier, or, a plurality of routing forwarding policies have a one-to-one mapping relationship with service identifiers respectively.

Optionally, the forwarding module 620 of the apparatus is further configured to determine, in a case that the destination address is an address not of a service instance, an address of a service instance corresponding to the destination address; and send the address of the service instance corresponding to the destination address to the service request node.

Optionally, the forwarding module 620 of the apparatus is further configured to forward, in a case that the service data stream does not carry a service identifier, the service data stream according to a routing forwarding policy other than the target routing forwarding policy.

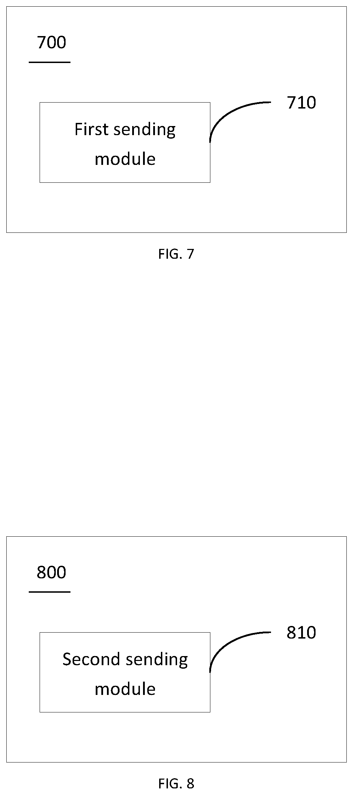

FIG. 7 shows a schematic structural diagram of a data transmission apparatus 700 provided by embodiments of the present application. The apparatus 700 includes: a first sending module 710, configured to send a plurality of routing forwarding policies to a gateway device, wherein a plurality of routing forwarding policies are indexed by a service identifier, or, a plurality of routing forwarding policies have a one-to-one mapping relationship with service identifiers respectively; and the service identifier is used for identifying a service type or the service identifiers are used for identifying service types respectively.

Optionally, a plurality of routing forwarding policies include a second packet forwarding policy and a first packet forwarding policy. The second packet forwarding policy is used to forward a service data stream as a subsequent packet. The first packet forwarding policy is used to forward a service data stream as a first packet.

Optionally, the first packet forwarding policy is configured with at least one of the following: the a service identifier; a network service level agreement (SLA) requirement indexed by a service identifier; a computing resource state, indexed by a service identifier, of a service instance; a network resource state indexed by a service identifier; related information of a first gateway, the first gateway being a network ingress gateway; or related information of a second gateway, the second gateway being a network egress gateway, and the related information of the second gateway being indexed by a service identifier.

Optionally, the second packet forwarding policy is configured with at least one of the following: a service identifier; a network service level agreement (SLA) requirement indexed by a service identifier; a network resource state indexed by a service identifier; related information of a third gateway, the third gateway being a network ingress gateway; or an address prefix, indexed by a service identifier, of an address of a service instance.

FIG. 8 shows a schematic structural diagram of a data transmission apparatus 800 provided by embodiments of the present application. The apparatus 800 includes: a second sending module 810, configured to send a service data stream, wherein the service data stream carries a service identifier and/or a destination address, and the service identifier is used for identifying a service type requested by a service requester.

Optionally, sending the service data stream includes at least one of the following: in a case that the service data stream is a first packet, the service data stream which carries the destination address but does not carry the service identifier is sent; or, in a case that the service data stream is a subsequent packet, the service data stream which carries the destination address and the service identifier is sent, wherein the service identifier is determined and sent by a gateway device based on the destination address.

The apparatuses 600-800 provided by the embodiments of the present application can perform the methods described in the foregoing method embodiments, and achieve the functions and beneficial effects of the methods described in the foregoing method embodiments, and will not be repeated here.

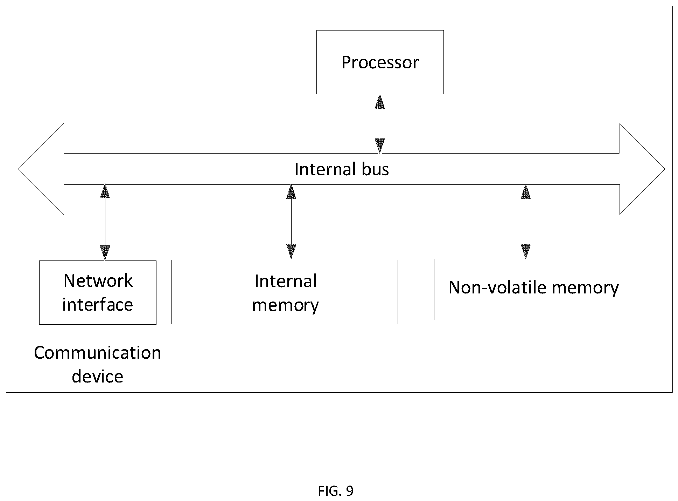

FIG. 9 shows a schematic hardware structure diagram of a communication device provided by embodiments of the present application. Referring to the figure, at the hardware level, the communication device includes a processor, optionally an internal bus, a network interface, and a memory. The memory may include an internal memory such as a high-speed random-access memory (RAM), or a non-volatile memory such as at least one disk memory. Of course, the communication device may also include hardware required for other services.

The processor, the network interface, and the memory may be interconnected by the internal bus, which may be an industry standard architecture (ISA) bus, a peripheral component interconnect (PCI) bus, or an extended industry standard architecture (EISA) bus, among others. The bus may be divided into an address bus, a data bus, a control bus, and the like. For ease of illustration, only one bi-directional arrow is shown in the figure, but it does not indicate only one bus or one type of bus.

The memory is configured to store a program. Specifically, the program may include a program code, and the program code includes computer operating instructions. The memory may include an internal memory and a non-volatile memory, and provides instructions and data to the processor.

The processor reads a corresponding computer program from the non-volatile memory into the internal memory and then runs the computer program to form an apparatus for locating a target user at a logical level. The processor executes the program stored in the memory, and is specifically configured to perform the method disclosed in the embodiments shown in FIG. 1 to FIG. 5 and achieve the functions and beneficial effects of various methods described in the foregoing method embodiments, which will not be repeated here.

The above method disclosed in the embodiments shown in FIG. 1 to FIG. 5 of the present application may be applied to the processor or implemented by the processor. The processor may be an integrated circuit chip having signal processing capabilities. During an implementation process, all the steps of the above method may be completed by an integrated logic circuit of hardware or an instruction in the form of software in the processor. The above processor may be a general-purpose processor, including a central processing unit (CPU), a network processor (NP) and the like. The processor may also be a digital signal processor (DSP), an application specific integrated circuit (ASIC), a field-programmable gate array (FPGA) or other programmable logic devices, discrete gate or transistor logic devices, and discrete hardware components. The various methods, steps, and logic block diagrams disclosed in the embodiments of the present application may be implemented or performed. The general-purpose processor may be a microprocessor, or the processor may also be any conventional processor, etc. The steps of the method disclosed in conjunction with the embodiments of the present application may be directly embodied to be executed and completed by a hardware decoding processor, or may be executed and completed through a combination of hardware and software modules in the decoding processor. The software module may be located in a mature storage medium in the art, such as a random access memory, a flash memory, a read-only memory, a programmable read-only memory, an electrically erasable programmable memory, and a register. The storage medium is located in the memory. The processor reads information in the memory and completes the steps of the above method in combination with hardware thereof.

The communication device can also perform the methods described in the foregoing method embodiments, and achieve the functions and beneficial effects of the methods described in the foregoing method embodiments, and will not be repeated here.

Of course, in addition to the software implementations, the communication device of the present application does not exclude other implementations, such as logic devices or combinations of software and hardware, that is, an execution body of the following process flows is not limited to each logic unit, but may be hardware or logic devices.

An embodiment of the present application further proposes a computer-readable storage medium. The computer-readable storage medium stores one or more programs that, when executed by a communication device including a plurality of applications, cause the communication device to perform the methods disclosed in the embodiments shown in FIG. 1 to FIG. 5 and to achieve the functions and beneficial effects of the methods described in the foregoing method embodiments, which are not repeated here.

The computer-readable storage medium includes: a read-only memory (ROM), a random access memory (RAM), a magnetic disk or an optical disk, etc.

Further, an embodiment of the present application further provides a computer program product. The computer program product includes a computer program stored on a non-transitory computer-readable storage medium, the computer program includes program instructions, and the program instructions, when executed by a computer, implement the following flow: the methods disclosed in the embodiments shown in FIG. 1 to FIG. 5, and achieve the functions and beneficial effects of the methods described in the foregoing method embodiments, which are not repeated here.

In total, the above is merely preferred embodiments of the present application and is not intended to limit the protection scope of the present application. Any modifications, equivalent replacements, improvements, etc. made within the spirit and principle of the present application shall fall within the scope of protection of the present application.

The system, apparatus, module or unit illustrated in the above embodiments may be specifically embodied by a computer chip or entity, or by a product having a certain function. A typical implementation device is a computer. In particular, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

The computer-readable medium includes permanent and non-permanent, and removable and non-removable media, and may achieve information storage through any method or technology. The information may be computer-readable instructions, data structures, modules of programs, or other data. Examples of the computer storage medium include but are not limited to a phase-change RAM (PRAM), a static RAM (SRAM), a dynamic RAM (DRAM), other types of random access memories (RAMs), a read-only memory (ROM), an electrically erasable programmable ROM (EEPROM), a flash memory or other memory technologies, a compact disc read-only memory (CD-ROM), a digital versatile disc (DVD) or other optical storage and magnetic cassette tape, magnetic-tape magnetic-disk storage or other magnetic storage devices or any other non-transmission media, and may be used to store information that can be accessed by a computing device. According to the definition herein, the computer-readable medium does not include transitory media, such as modulated data signals and carriers.

It should further be noted that, the terms "include", "comprise" or any other variants thereof are intended to cover non-exclusive inclusion, so that a process, method, article or apparatus including a series of elements not only includes those elements, but also includes other elements not clearly listed, or also includes elements inherent to this process, method, article or apparatus. Without further restrictions, the elements defined by the sentence "including a..." do not exclude that there are other same elements in the process, method, article or device including the elements.

The various embodiments in this specification are described in a progressive manner, and the same or similar parts between the various embodiments can be referred to each other. Each embodiment focuses on contents different from other embodiments. In particular, as for the system embodiments, as they are basically similar to the method embodiment, the description is relatively simple. As for related parts, please refer to part of the description in the method embodiments.

## Claims

1. A data transmission method, performed by a gateway device, comprising:
receiving a service data stream sent by a service request node; and
forwarding, in a case that the service data stream carries a service identifier, the service data stream according to a target routing forwarding policy corresponding to the service identifier,
wherein the service identifier is used for identifying a service type requested by a service requester.

2. The method according to claim 1, wherein forwarding the service data stream according to the target routing forwarding policy corresponding to the service identifier comprises:
parsing a destination address from the service data stream; and
forwarding, in a case that the destination address is an address not of a service instance, the service data stream according to a first packet forwarding policy; or
processing, in a case that the destination address is an address of a service instance, the service data stream according to a second packet forwarding policy,
wherein the first packet forwarding policy and the second packet forwarding policy belong to the target routing forwarding policy, the first packet forwarding policy is used to forward a service data stream as a first packet, and the second packet forwarding policy is used to forward a service data stream as a subsequent packet.

3. The method according to claim 2, wherein the first packet forwarding policy is configured with at least one of the following:
a service identifier;
a network service level agreement called SLA requirement indexed by a service identifier;
a computing resource state, indexed by a service identifier, of a service instance;
a network resource state indexed by a service identifier;
related information of a first gateway, the first gateway being a network ingress gateway; or
related information of a second gateway, the second gateway being a network egress gateway, and the related information of the second gateway being indexed by a service identifier.

4. The method according to claim 2, wherein the second packet forwarding policy is configured with at least one of the following:
a service identifier;
a network service level agreement called SLA requirement indexed by a service identifier;
a network resource state indexed by a service identifier;
related information of a third gateway, the third gateway being a network ingress gateway; or
an address prefix, indexed by a service identifier, of an address of a service instance.

5. The method according to any one of claims 1 to 4, wherein prior to forwarding the service data stream according to the target routing forwarding policy corresponding to the service identifier, the method further comprises any one of the following:
selecting, according to the service identifier, the target routing forwarding policy from a plurality of routing forwarding policies; or
selecting, according to a service characteristic parameter corresponding to the service identifier, the target routing forwarding policy from a plurality of routing forwarding policies, wherein a service characteristic parameter corresponding to the target routing forwarding policy is the same as the service characteristic parameter corresponding to the service identifier,
wherein the service characteristic parameter comprises at least one of a network bandwidth, latency, jitter, packet loss, or computing quality of service.

6. The method according to claim 5, further comprising:
receiving a plurality of routing forwarding policies sent by a network node,
wherein a plurality of the routing forwarding policies are indexed by a service identifier, or, a plurality of the routing forwarding policies have a one-to-one mapping relationship with service identifiers respectively.

7. The method according to claim 2, further comprising:
determining, in a case that the destination address is an address not of a service instance, an address of a service instance corresponding to the destination address; and
sending the address of the service instance corresponding to the destination address to the service request node.

8. The method according to claim 1, further comprising:
forwarding, in a case that the service data stream does not carry a service identifier, the service data stream according to a routing forwarding policy other than the target routing forwarding policy.

9. A data transmission method, performed by a network node, comprising:
sending a plurality of routing forwarding policies to a gateway device,
wherein a plurality of the routing forwarding policies are indexed by a service identifier, or, a plurality of the routing forwarding policies have a one-to-one mapping relationship with service identifiers respectively; and
the service identifier is used for identifying a service type.

10. The method according to claim 9, wherein a plurality of the routing forwarding policies comprise a second packet forwarding policy and a first packet forwarding policy,
wherein the first packet forwarding policy is used to forward a service data stream as a first packet, and the second packet forwarding policy is used to forward a service data stream as a subsequent packet.

11. The method according to claim 10, wherein the first packet forwarding policy is configured with at least one of the following:
a service identifier;
a network service level agreement called SLA requirement indexed by a service identifier;
a computing resource state, indexed by a service identifier, of a service instance;
a network resource state indexed by a service identifier;
related information of a first gateway, the first gateway being a network ingress gateway; or
related information of a second gateway, the second gateway being a network egress gateway, and the related information of the second gateway being indexed by a service identifier.

12. The method according to claim 10, wherein the second packet forwarding policy is configured with at least one of the following:
a service identifier;
a network service level agreement called SLA requirement indexed by a service identifier;
a network resource state indexed by a service identifier;
related information of a third gateway, the third gateway being a network ingress gateway; or
an address prefix, indexed by a service identifier, of an address of a service instance r.

13. A data transmission method, performed by a service request node, comprising:
sending a service data stream,
wherein the service data stream carries a service identifier and/or a destination address, and the service identifier is used for identifying a service type requested by a service requester.

14. The method according to claim 13, wherein sending the service data stream comprises at least one of the following:
sending, in a case that the service data stream is a first packet, the service data stream which carries the destination address but does not carry the service identifier; or
sending, in a case that the service data stream is a subsequent packet, the service data stream which carries the destination address and the service identifier, wherein the service identifier is determined by a gateway device based on the destination address and sent by the gateway device.

15. A communication device, comprising a processor and a memory, wherein the memory stores a program or instruction capable of running on the processor, and the program or instruction, when executed by the processor, implements the steps of the data transmission method according to any one of claims 1 to 8, or, implements the steps of the data transmission method according to any one of claims 9 to 12, or, implements the steps of the data transmission method according to any one of claims 13 to 14.

16. A computer-readable storage medium, storing a program or instruction thereon, wherein the program or instruction, when executed by a processor, implements the steps of the data transmission method according to any one of claims 1 to 8, or, implements the steps of the data transmission method according to any one of claims 9 to 12, or, implements the steps of the data transmission method according to any one of claims 13 to 14.
